# EUROPEAN PATENT SPECIFICATION

(11) **EP 2 607 120 B1**
(45) Date of publication and mention of the grant of the patent: **14.10.2015**
(21) Application number: 12198255.7
(22) Date of filing: 19.12.2012
(51) Int. Cl.: B60H 1/03, B60H 1/22, F24H 1/00, F24H 1/10, F24H 9/18

(54) **Electric heating type hot water heating apparatus, vehicle air-conditioning apparatus provided therewith, and vehicle**
Elektrische heizungsartige Heißwassererwärmungsvorrichtung, Fahrzeugklimaanlagenvorrichtung damit und Fahrzeug
Appareil de chauffage à eau chaude de type chauffage électrique, appareil de climatisation de véhicule équipé de celui-ci et véhicule

(30) Priority: 19.12.2011 JP 2011277514
(43) Date of publication of application: 26.06.2013
(73) Proprietor: Valeo Japan Co., Ltd., Saitama 360-0193 (JP)
(72) Inventor: Nagano, Hideki, Kumagaya-shi, Saitama 360-0193 (JP); Ida, Hiroyuki, Kumagaya-shi, Saitama 360-0193 (JP); Iwasa, Akio, Kumagaya-shi, Saitama 360-0193 (JP); Tanda, Kiyoshi, Kumagaya-shi, Saitama 360-0193 (JP); Hayashi, Naoto, Kumagaya-shi, Saitama 360-0193 (JP)
(74) Representative: Fauré, Marion-Laurie

(56) References cited:
- DE-A1- 3 447 182
- DE-A1- 3 512 659
- DE-U1- 29 506 235
- DE-U1- 29 513 487

## Description

### TECHNICAL FIELD

The invention relates to an electric heating type hot water heating apparatus for supplying hot water as a heat transfer medium to a heating heat exchanger disposed in a vehicle air-conditioning apparatus via a piping, the vehicle air-conditioning apparatus provided with the electric heating type hot water heating apparatus, and a vehicle.

### BACKGROUND ART

A hybrid electrical vehicle (hereinafter, may be called also an HV vehicle) or an electrical vehicle (hereinafter, may be called also an EV vehicle) has a problem in that since a calorific value of an internal combustion engine (hereinafter, may be called also an engine) is small or an internal combustion engine itself does not exist, a sufficient amount of heat cannot be obtained by a heating system by a hot water type heater core making use of engine exhaust heat from engine cooling water as in a conventional gasoline vehicle.

To solve the problem, there is proposed a technology for mounting on a vehicle with a heating device including a heat transfer block (first housing) for accommodating an electrically heated wire as a heating element and an outside case (second housing) for accommodating the heat transfer block and forming a flow path through which the heat transfer medium flows between the heat transfer block and the outside case as an auxiliary heat source for making up for the deficiency of exhaust heat of an engine in the HV vehicle and as an alternate heat source in place of an engine in the EV vehicle (refer to, for example, Patent Literature 1).

Incidentally, a ceramic heater is used to directly heat a liquid. As the ceramic heater, a ceramic heater which prevents an occurrence of damage due to a heat shock is disclosed (refer to, for example, Patent Literature 2).

Document DE 29506235U describes a heating apparatus according to the preamble of claim 1.

### CITATION LIST

### PATENT LITERATURE

Patent Literature 1: JP 2011-143781 A
Patent Literature 2: JP 2006-236617 A

### SUMMARY OF THE INVENTION

### PROBLEMS TO BE SOLVED BY THE INVENTION

The heating device described in Patent Literature 1 has a problem in that since a cast heat transfer block is used, it is difficult to reduce a size and weight of the heating device. Further, since the heat transfer medium is heated via the heat transfer block, a problem arises in that a prompt heating request cannot be coped with. Incidentally, although Patent Literature 1 discloses to use a sheathed heater including a coil-like heating wire such as a nichrome wire and the like inserted into a metal piping as the electrically heated wire, Patent Literature 1 does not disclose to use a ceramic heater having a higher watt density. Further, although Patent Literature 2 discloses a ceramic heater, Patent Literature 2 does not disclose a ceramic heater suitable for a vehicle air-conditioning apparatus.

An object of the invention is to provide an electric heating type hot water heating apparatus which can efficiently perform heating and whose size and weight are reduced, a vehicle air-conditioning apparatus provided therewith, and a vehicle.

### MEANS FOR SOLVING THE PROBLEMS

According to the present invention, an electric heating type hot water heating apparatus for supplying hot water as a heat transfer medium to a heating heat exchanger disposed in a vehicle air-conditioning apparatus via a piping, comprising: a case having an inlet port, a flow path, and an outlet port of the heat transfer medium; and a ceramic heater disposed in the flow path.

In the electric heating type hot water heating apparatus according to the invention, the flow path includes an upward flow path which extends in an up/down direction of a vehicle as well as in which a water flow direction of the heat transfer medium is directed upward; the outlet port is disposed on an upper end side of the upward flow path; the ceramic heater includes a rod-shaped shaft section as well as is disposed in a state that an axis direction of the shaft section is caused to agree with the water flow direction of the heat transfer medium; and a part or all of the shaft section is a heat generating section. The heat transfer medium is more efficiently heated by efficiently excluding bubbles as well as flow noise due to the bubbles can be suppressed. Further, the ceramic heater can be prevented from being damaged by a heat shock.

In the electric heating type hot water heating apparatus according to the invention, it is preferable that the flow path further includes a lateral flow path joined to the upward flow path on a lower end side thereof; and the ceramic heater is disposed in the upward flow path. A space can be saved.

In the electric heating type hot water heating apparatus according to the invention, it is preferable that the ceramic heater is a first ceramic heater; the flow path further includes a downward flow path which extends in an up/down direction of a vehicle as well as in which a water flow direction to the heat transfer medium is directed downward; the downward flow path is joined to the lateral flow path on a lower end side thereof; a second ceramic heater is disposed in the downward flow path; the second ceramic heater includes a rod-shaped shaft section as well as is disposed in a state that an axis direction of the shaft section is caused to agree with the water flow direction of the heat transfer medium; and a part or all of the shaft section of the second ceramic heater is a heat generating section. A calorific value can be more increased while saving a space.

In the electric heating type hot water heating apparatus according to the invention, it is preferable that the ceramic heater includes a hollow section extending in the axis direction of the shaft section, an extreme end hole disposed on an upper end of the shaft section, and a side surface hole disposed on a side surface of the shaft section; and the side surface hole is disposed toward the lateral flow path side. The heat transfer medium is more efficiently heated by efficiently excluding bubbles as well as flow noise due to the bubbles can be suppressed. Further, a pressure loss when the heat transfer medium is flown can be reduced.

In the electric heating type hot water heating apparatus according to the invention, it is preferable that each of the first ceramic heater and the second ceramic heater includes a hollow section extending in the axis direction of the shaft section, an extreme end hole disposed on the upper end of the shaft section, and a side surface hole disposed on the side surface of the shaft section; and any of the side surface holes is disposed toward the lateral flow path side. The heat transfer medium can be more efficiently heated. Further, a pressure loss when the heat transfer medium is flown can be reduced.

In the electric heating type hot water heating apparatus according to the invention, it is preferable that when a required heating amount is smaller than a predetermined amount, only the first ceramic heater is caused to generate heat; and when the required heating amount is larger than the predetermined amount, the first ceramic heater and the second ceramic heater are caused to generate heat. A calorific value can be easily switched according to a required heating amount.

In the electric heating type hot water heating apparatus according to the invention, it is preferable to further comprising a flow rate control means for performing control for increasing a flow rate of the heat transfer medium when the required heating amount is large. The ceramic heater can be prevented from being damaged by a heat shock. Further, a temperature of the heat transfer medium can be made uniform and a temperature of the heat transfer medium in an inlet port of a case can be made near to that in an outlet port thereof.

In the electric heating type hot water heating apparatus according to the invention, it is preferable that the flow path includes an upward flow path which extends in an up/down direction of a vehicle as well as in which a water flow direction of the heat transfer medium is upward; and an inner wall of the case includes a taper section whose inner diameter is gradually reduced toward an upper side on an upper end side of the upward flow path. The heat transfer medium is more efficiently heated by efficiently excluding bubbles as well as flow noise due to the bubbles can be suppressed.

In the electric heating type hot water heating apparatus according to the invention, it is preferable that the ceramic heater or/and the second ceramic heater includes a vibration-proof member disposed on a side surface. A damage of the ceramic heater due to a vibration can be prevented.

In the electric heating type hot water heating apparatus according to the invention, it is preferable that the inner wall of the case includes a spiral guide. The heat transfer medium can be more efficiently heated by disturbing a flow of the heat transfer medium. Further, the ceramic heater can be prevented from being damaged by a heat shock.

The vehicle air-conditioning apparatus according to the invention is characterized by comprising the electric heating type hot water heating apparatus according to the invention.

In the vehicle air-conditioning apparatus according to the invention, it is preferable that the vehicle is a hybrid vehicle including a heating circuit for circulating engine cooling water as a heat transfer medium between an engine and a heating heat exchanger; the electric heating type hot water heating apparatus and a bypass circuit which bypasses the engine as well as circulates hot water between the electric heating type hot water heating apparatus and the heating heat exchanger are disposed on the heating circuit; and the vehicle air-conditioning apparatus comprises a bypass control means for opening the bypass circuit when a temperature of the engine cooling water is lower than a predetermined temperature. The heat transfer medium can be more efficiently heated, and prompt heating becomes possible.

The vehicle according to the invention is characterized by comprising the electric heating type hot water heating apparatus according to the invention.

### EFFECTS OF THE INVENTION

The invention can provide an electric heating type hot water heating apparatus which can efficiently perform heating and whose size and weight are reduced, a vehicle air-conditioning apparatus provided the electric heating type hot water heating apparatus, and a vehicle.

### BRIEF DESCRIPTION OF DRAWINGS

FIG. 1 is a longitudinal broken sectional view showing an electric heating type hot water heating apparatus according to a first embodiment.
FIG. 2 is a longitudinal broken sectional view showing an electric heating type hot water heating apparatus according to a second embodiment.
FIG. 3 is a longitudinal broken sectional view showing an electric heating type hot water heating apparatus according to a third embodiment.
FIG. 4 is a longitudinal broken sectional view showing an electric heating type hot water heating apparatus according to a fourth embodiment.
FIG. 5 is a longitudinal broken sectional view showing an electric heating type hot water heating apparatus according to a fifth embodiment.
FIG. 6 is a schematic view showing a first example of a heating circuit of a vehicle air-conditioning apparatus and shows a mode that a vehicle is an HV vehicle.
FIG. 7 is a schematic view showing a second example of the heating circuit of the vehicle air-conditioning apparatus and shows a mode that the vehicle is an EV vehicle.
FIG. 8 is a schematic view showing a heating circuit of an HV vehicle air-conditioning apparatus and is a view explaining a case that a temperature of engine cooling water is lower than a predetermined temperature.

### DESCRIPTION OF EMBODIMENTS

An aspect of the invention will be explained below referring to accompanying drawings. The embodiments explained below are examples of the invention, and the invention is not restricted by the embodiments. Note that, in the description and the drawings, it is assumed that components denoted by the same reference numerals show the same components each other. Various modifications may be employed within the scope of the appended claims.

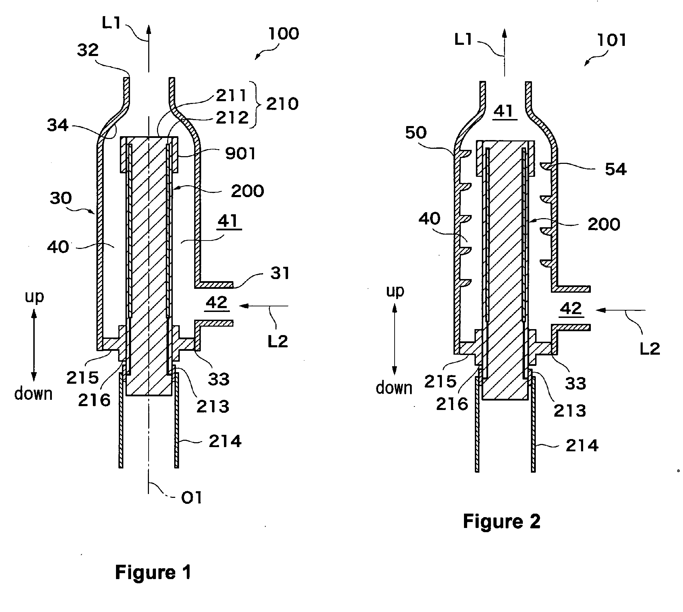

FIG. 1 is a longitudinal broken sectional view showing an electric heating type hot water heating apparatus according to a first embodiment. An up/down direction in the drawing shows an up/down direction of a vehicle. The electric heating type hot water heating apparatus 100 according to the embodiment comprises a case 30 having an inlet port 31, a flow path 40, and an outlet port 32 of a heat transfer medium; and a ceramic heater 200 disposed in the flow path 40.

The case 30 has the flow path 40 of the heat transfer medium as an internal space, causes the heat transfer medium to flow from the inlet port 31 to the flow path 40, to pass through the flow path 40, and to flow from the outlet port 32. The case 30 is composed of a heat resistant resin, for example, 6, 6-nylon and the like. The flow path 40 has a lateral cross section of, for example, a circular shape, an elliptical shape, a rectangular shape, a square shape, a triangular shape, or a polygonal shape. Among the shapes, the lateral cross section is more preferably formed in the circular shape.

The flow path 40 preferably has an upward flow path 41 which extends in the up/down direction of the vehicle as well as in which a water flow direction L1 of the heat transfer medium is directed upward. The provision of the upward flow path 41 can efficiently exclude bubbles. Here, the water flow direction L1 which is directed upward means that when the electric heating type hot water heating apparatus 100 is mounted on the vehicle, an upstream side of the water flow direction L1 becomes relatively lower than a downstream side thereof and includes a mode that the water flow direction L1 of the heat transfer medium tilts to the up/down direction of the vehicle in addition to a mode that the water flow direction L1 of the heat transfer medium perfectly agrees with the up/down direction of the vehicle as illustrated in FIG. 1. Note that the up/down direction of the vehicle may not agree with a vertical direction depending on a tilt of the ground.

In the upward flow path 41, it is preferable to form an inner wall of the case 30 as a taper section 34 whose inner diameter is gradually reduced toward an upper side. The taper section 34 prevents the bubbles from being caused to stay at a corner of the inner wall of the case 30 by chamfering the corner. The taper section 34 has a shape of, for example, a conical shape and a bugle shape in addition to an inverted bowl shape as illustrated in FIG. 1.

It is preferable that the flow path 40 further has a lateral flow path 42 joined to the upward flow path 41 on a lower end side thereof. Since the flow path 40 is formed in an L shape, a space can be saved. Further, since the inlet port 31 is disposed to the lateral flow path 42, an inserting port 33 of the ceramic heater 200 can be disposed to a lower end of the case 30, and thereby maintenance becomes easy. Here, a lateral direction means that a water flow direction L2 of the heat transfer medium is directed laterally. The water flow direction L2 which is directed laterally means that the water flow direction L2 of the lateral flow path 42 intersects the water flow direction L1 of the upward flow path 41 at an angle and more preferably intersects the water flow direction L1 thereof vertically as illustrated in FIG. 1.

The outlet port 32 is preferably disposed to an upper end side of the upward flow path 41. More preferably, the outlet port 32 is disposed to an upper end of the upward flow path 41 as illustrated in FIG. 1. The outlet port 32 disposed to the upper end side of the upward flow path 41 can more efficiently heat the heat transfer medium by efficiently excluding the bubbles as well as can suppress flow noise due to the bubbles. Further, the ceramic heater 200 can be prevented from being damaged by the heat shock. The damage of the ceramic heater 200 by the heat shock will be explained here. When the heat transfer medium is heated by the ceramic heater 200, dissolved oxygen and the like are generated as the bubbles which are deposited on a surface of the ceramic heater 200. At the time, when the bubbles are largely grown in the vicinity of a pore existing on the surface of the ceramic heater 200, since the heat transfer medium is not in contact with the surface of the ceramic heater 200 in the portion where large bubbles are deposited, a temperature of the surface of the ceramic heater 200 may excessively increase. As a result, a temperature difference between the surface of the ceramic heater 200 and the heat transfer medium becomes large, and when the large bubbles are separated from the surface of the ceramic heater 200, a heat transfer medium having a low temperature instantly comes into contact with a surface of a ceramic heater 200 having a high temperature to thereby generate the heat shock, and therefore the ceramic heater 200 is damaged.

The ceramic heater 200 includes a shaft section 210, a terminal section 213 disposed to an end side of the shaft section 210, and a lead wire 214 joined to the terminal section 213.

The shaft section 210 has a support member 211 and a heating element 212 buried in a side surface of the support member 211. The support member 211 is composed of ceramics. The ceramics are, for example, alumina, silicon nitride, aluminum nitride, or silicon carbide. The support member 211 is preferably of a rod shape. The rod shape means a shape which has a width narrow and slender to a length and is, for example, a columnar shape, a strip shape, and a cylindrical shape. The support member 211 has a lateral cross section of, for example, a circular shape, an elliptical shape, a rectangular shape, a square shape, a triangular shape, and a polygonal shape. Among the shapes, the support member 211 more preferably has a columnar shape or a cylindrical shape. FIG. 1 shows a mode that the support member 211 has the columnar shape. The heating element 212 is mainly composed of a high melting point metal, for example, tungsten, molybdenum, rhenium, and the like. The heating element 212 is formed in a line shape and generates heat by being energized. A portion of the shaft section 210 in which the heating element 212 is disposed acts as a heat generating section. The heating element 212 is disposed to a part of or entirely of the shaft section 210 in an axial direction O1. The heating element 212 is preferably disposed to an entire portion in contact with the heat transfer medium.

A drain wire 216 electrically connects between the heating element 212 and the terminal section 213. The drain wire 216 is buried in a side surface of the support member 211 and connected to the heating element 212 on an end side thereof. The other end side of the drain wire 216 is exposed on an outer surface of the shaft section 210 is connected to the terminal section 213 disposed on the surface of the shaft section 210. With the configuration, the terminal section 213 is electrically connected to the heating element 212. The lead wire 214 is jointed to the terminal section 213 by, for example, brazing. The heating element 212 generates heat by energizing the lead wire 214.

It is preferable that the ceramic heater 200 includes a vibration-proof member 901 disposed on a side surface. The vibration-proof member 901 is more preferably disposed to a side surface of an end portion side opposite to a side where the terminal section 213 is disposed. The vibration-proof member 901 suppresses a transmission of vibration to the ceramic heater 200 when the vehicle travels to thereby improve a vibration-proof property of the ceramic heater 200. A material of the vibration-proof member 901 is, for example, metal and rubber. The vibration-proof member 901, for example, may be formed integrally by baking with the ceramic heater 200 by fitting a ring-like metal around an outer peripheral surface of the ceramic heater 200 or may be formed independently of the ceramic heater 200. Further, a part of the inner wall of the case 30 may be processed so as to be in contact with the vibration-proof member 901.

The ceramic heater 200 is preferably disposed in the flow path 40 in a state that the axis direction O1 of the shaft section 210 is caused to be in agreement with the water flow direction L1 of the heat transfer medium. The ceramic heater 200 is more preferably disposed in the upward flow path 41 in the flow path 40. Here, as the state that the axis direction O1 of the shaft section 210 is caused to be in agreement with the water flow direction L1 of the heat transfer medium, the ceramic heater 200 may be disposed so as to be tilted to the water flow direction L1 in such a degree that the ceramic heater 200 is not in contact with the inner wall of the case 30 in addition to a mode that the axis direction O1 is caused to be perfectly in agreement with the water flow direction L1 as illustrated in FIG. 1. Further, the ceramic heater 200 is preferably disposed in a state that the heat generating section is dipped in its entirety. The heat of the ceramic heater 200 can be efficiently transferred to the heat transfer medium by directly heating the heat transfer medium by the ceramic heater 200 so that heating can be performed promptly. Further, since the electric heating type hot water heating apparatus 100 has a simple structure, the apparatus 100 can be reduced in size and weight. Further, since the ceramic heater 200 has a high watt density, a high calorific value can be obtained even by a small number of ceramic heaters, and thereby a number of parts can be reduced and a further reduction in size is possible.

The ceramic heater 200 can be attached to the case 30 by, for example, attaching a flange 215 is to an outer periphery of the case 30 on the terminal section 213 side, inserting the ceramic heater 200 into the flow path 40 from the inserting port 33 disposed to the case 30, abutting the flange 215 against an inner peripheral surface of the inserting port 33 via a seal member such as an O ring and the like (not illustrated) interposed therebetween, and fixing the ceramic heater 200 by a fixing member such as a screw, a clamp, and the like (not illustrated).

FIG. 2 is a longitudinal broken sectional view showing an electric heating type hot water heating apparatus according to a second embodiment. In the electric heating type hot water heating apparatus 101 according to the second embodiment, an inner wall of a case 50 preferably has a spiral guide 54. Since the electric heating type hot water heating apparatus 101 according to the second embodiment has the same basic configuration as the electric heating type hot water heating apparatus 100 according to the first embodiment, an explanation as to a common point is not repeated and a different point will be explained here.

The spiral guide 54 is more preferably disposed to an inner wall of a flow path 40 to which a ceramic heater 200 is disposed in an inner wall of the case 50. The spiral guide 54 can make a temperature of the heat transfer medium more uniform regardless of a distance from the ceramic heater 200 by disturbing a flow of a heat transfer medium and efficiently diffusing heat of the heat transfer medium. The spiral guide 54 may be formed integrally with the case 50 or may be formed independently of the case 50. Here, the term "spiral" means a state that a convex portion disposed on the inner wall of the case 50 forms a spatial curve directed upward or downward in an axis direction of the case 50 while turning along a peripheral direction of the inner wall of the case 50. In the embodiment, a spiral portion may be partly discontinuous as long as the spiral portion can disturb the flow of the heat transfer medium.

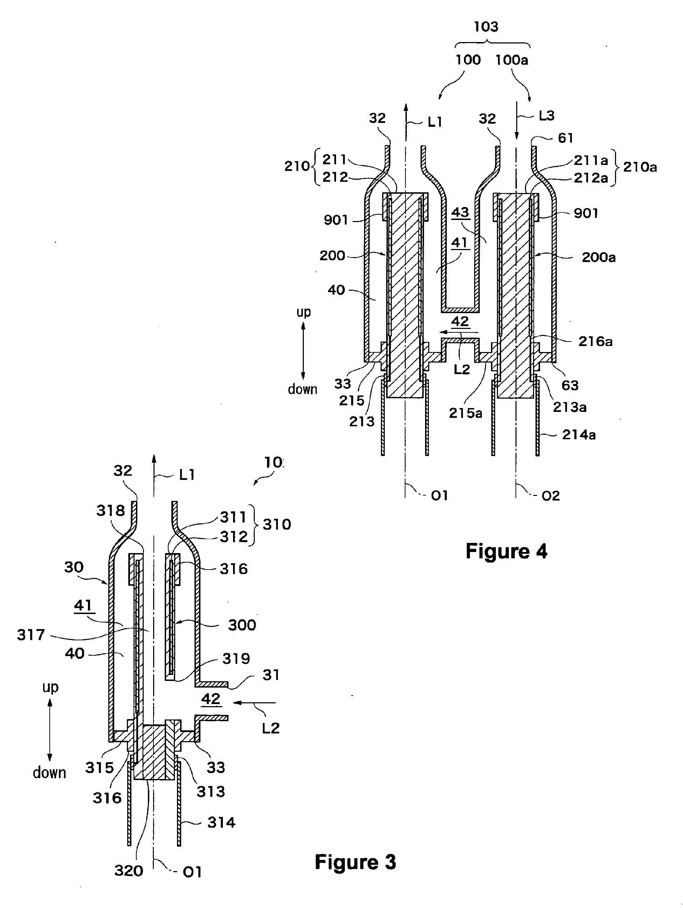

FIG. 3 is a longitudinal broken sectional view showing an electric heating type hot water heating apparatus according to a third embodiment. In the electric heating type hot water heating apparatus 102 according to the third embodiment, a ceramic heater 300 has a hollow section 317 extending in an axis direction O1 of a shaft section 310, an extreme end hole 318 disposed on an upper end of the shaft section 310, and a side surface hole 319 disposed on a side surface of the shaft section 310, and the side surface hole 319 is preferably disposed toward a lateral flow path 42 side. Since the electric heating type hot water heating apparatus 102 according to the third embodiment has the same basic configuration as the electric heating type hot water heating apparatus 100 according to the first embodiment, an explanation as to a common point is not repeated and a different point will be explained here.

A basic configuration of the ceramic heater 300 is the same as the ceramic heater 200 except that the shaft section 310 is formed in a cylindrical shape having the hollow section 317, the extreme end hole 318, and the side surface hole 319. The shaft section 310 is preferably formed in a bottomed cylindrical shape. As a method of forming the shaft section 310 in the bottomed cylindrical shape, there is a method of forming a bottom section 320 using a filling member composed of, for example, ceramics, a heat resistant resin, and the like. Further, in the ceramic heater 300, a heating element 312 and a drain wire 316 are buried in a side surface of a support member 311 bypassing the side surface hole 319, and the heating element 312 on a right side in the drawing (a side where the side surface hole 319 is disposed) is electrically connected to a drain wire 316.

The hollow section 317 acts as a flow path of a heat transfer medium. The hollow section 317 has a lateral cross section of, for example, a circular, an elliptical shape, a rectangular shape, a square shape, a triangular shape, or a polygonal shape. Among the shapes, the lateral cross section is more preferably the circle. The extreme end hole 318 is a through hole disposed to an upper end of the shaft section 310 and communicating with the hollow section 317. The extreme end hole 318 is preferably disposed on the same straight line to the outlet port 32 of the case 30. The side surface hole 319 is a through hole disposed to the side surface of the shaft section 310 and communicating with the hollow section 317. The side surface hole 319 is formed by baking the shaft section 310 with a part of a side surface thereof scooped out. The side surface hole 319 is preferably disposed toward the lateral flow path 42 side. More preferably, the side surface hole 319 is disposed in confrontation with the lateral flow path 42. A pressure loss when the heat transfer medium is flown can be reduced by disposing the side surface hole 319 toward the lateral flow path 42 side.

In the electric heating type hot water heating apparatus 102 according to the third embodiment, a part of the heat transfer medium flows out from the extreme end hole 318 passing through the hollow section 317 from the side surface hole 319, and the remaining part of the heat transfer medium passes through between an inner wall of the case 30 and the ceramic heater 300. As described above, since the heat transfer medium is in contact with not only an outer peripheral surface of the shaft section 310 but also with an inner peripheral surface thereof, the heat transfer medium can be more efficiently heated.

FIG. 4 is a longitudinal broken sectional view showing an electric heating type hot water heating apparatus according to a fourth embodiment. Although the electric heating type hot water heating apparatus 100 according to the first embodiment is a mode provided with a set of one ceramic heater, when a more larger calorific value is required, the ceramic heater (first ceramic heater) 200 may be added with a ceramic heater (second ceramic heater) 200a. As an example of a mode having two ceramic heaters, an electric heating type hot water heating apparatus 103 according to the fourth embodiment will be explained referring to FIG. 4.

The electric heating type hot water heating apparatus 103 according to the fourth embodiment has such a structure that the electric heating type hot water heating apparatus 103 includes the same structure portion as the electric heating type hot water heating apparatus 100 according to the first embodiment (a left side portion of FIG. 4) and additionally includes an additional unit 100a for disposing the second ceramic heater 200a (a right side portion of FIG. 4) disposed on a side of the same structure portion as the electric heating type hot water heating apparatus 100 according to the first embodiment. Accordingly, in the structure portion common to the electric heating type hot water heating apparatus 100 according to the first embodiment of FIG. 4, reference numerals common to those of the electric heating type hot water heating apparatus 100 according to the first embodiment are employed for the purpose of convenience.

The additional unit 100a is preferably disposed on the side of the same structure portion as the electric heating type hot water heating apparatus 100 according to the first embodiment in parallel therewith in view of space-saving as illustrated in FIG. 4. At the time, in the additional unit 100a, the flow path 40 is a downward flow path 43. Here, a water flow direction L3 directed downward means that when the additional unit 100a is mounted on the vehicle, its upstream side becomes relative higher than its downstream side and includes a mode that the water flow direction L3 of the heat transfer medium tilts to the up/down direction of the vehicle in addition to a mode that the water flow direction L3 of the heat transfer medium perfectly agrees with the up/down direction of the vehicle. In the electric heating type hot water heating apparatus 103 according to the fourth embodiment, an inlet port 61 is disposed on an upper end side of the downward flow path 43. The heat transfer medium flows in from the inlet port 61, passes through the downward flow path 43, sequentially flows through a lateral flow path 42 and an upward flow path 41, and flows out from an outlet port 32 disposed to an upper end side of the upward flow path 41.

The second ceramic heater 200a is disposed in the downward flow path 43. The second ceramic heater 200a has the same structure as the first ceramic heater 200. The second ceramic heater 200a is disposed in a state that an axis direction 02 of a shaft section 210a is caused to agree with the water flow direction L3 of the heat transfer medium. The first ceramic heater 200 and the second ceramic heater 200a may have the same calorific value or may have a different calorific value.

In the electric heating type hot water heating apparatus 103 according to the fourth embodiment, since the flow path 40 is formed in a U shape, the flow path 40 can be made long while saving a space. Further, since the two ceramic heaters are provided, the calorific value can be more increased.

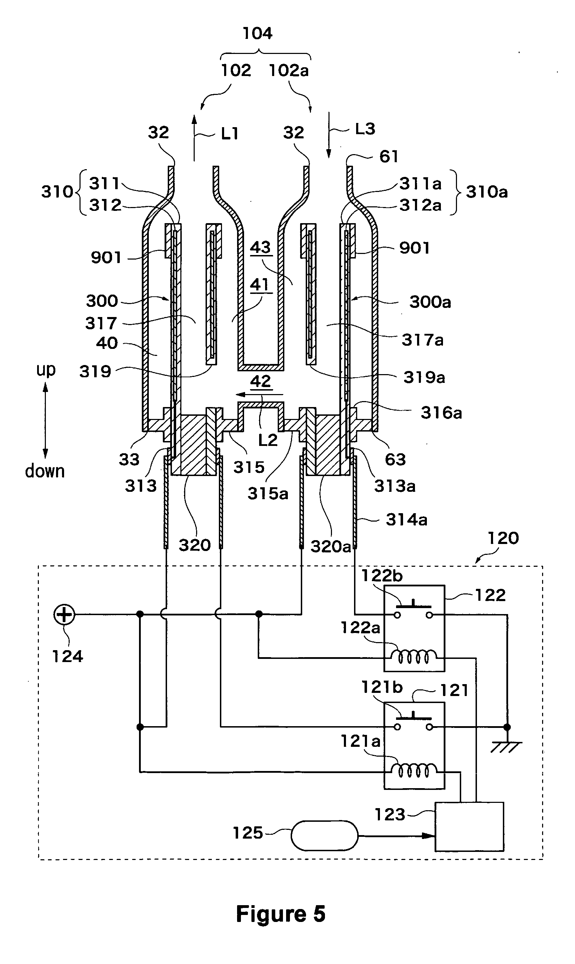

FIG. 5 is a longitudinal broken sectional view showing an electric heating type hot water heating apparatus according to a fifth embodiment. As another example of the mode having the two ceramic heaters, the electric heating type hot water heating apparatus 104 according to the fifth embodiment will be explained referring to FIG. 5. The electric heating type hot water heating apparatus 104 according to the fifth embodiment has such a structure that includes the same structure portion as the electric heating type hot water heating apparatus 102 according to the third embodiment (a left side portion of FIG. 5) and additionally includes an additional unit 102a for disposing a second ceramic heater 300a disposed on a side of the same structure portion as the electric heating type hot water heating apparatus 102 according to the third embodiment (a right side portion of FIG. 5). Note that, in the structure portion common to the electric heating type hot water heating apparatus 102 according to the third embodiment of FIG. 5, reference numerals common to those of the electric heating type hot water heating apparatus 102 according to the third embodiment are employed for the purpose of convenience. The electric heating type hot water heating apparatus 104 according to the fifth embodiment has a structure common to the electric heating type hot water heating apparatus 104 according to the fourth embodiment except that a first ceramic heater 300 and a second ceramic heater 300a have cylindrical shaft sections 310 and 310a.

The second ceramic heater 300a has the same structure as the first ceramic heater 300. The first ceramic heater 300 and the second ceramic heater 300a are preferably disposed with both side surface holes 319 and 319a directed toward a lateral flow path 42 side. More preferably, the side surface holes 319 and 319a are disposed in confrontation with the lateral flow path 42. A pressure loss when a heat transfer medium is flown can be reduced by disposing the side surface holes 319 and 319a toward the lateral flow path 42 side. The first ceramic heater 300 and the second ceramic heater 300a may have the same calorific value or may have a different calorific value.

In the electric heating type hot water heating apparatus 104 according to the fifth embodiment, since the flow path 40 is disposed in a U shape, the flow path 40 can be made long while saving a space. Further, since the two ceramic heaters that are formed cylindrically are provided, a large calorific value can be obtained more efficiently.

Although FIG. 4 and FIG. 5 show a mode in which the first ceramic heaters 200, 300 and the second ceramic heaters 200a, 300a are of the same type, a modification in which a type of the first the ceramic heaters 200, 300 is different from a type of the second ceramic heaters 200a, 300a may be employed. As examples of the modification, there are (1) a mode using a columnar ceramic heater as the first ceramic heater and using a cylindrical ceramic heater as the second ceramic heater and (2) a mode using the cylindrical ceramic heater as the first ceramic heater and using the columnar ceramic heater as the second ceramic heater.

Next, a switch mechanism for switching the two ceramic heaters will be explained referring to FIG. 5. In the electric heating type hot water heating apparatus 104 according to the fifth embodiment, it is preferable that when a required heating amount is smaller than a predetermined amount, only the first ceramic heater 300 is caused to generate heat; and when the required heating amount is larger than the predetermined amount, the first ceramic heater 300 and the second ceramic heater 300a are caused to generate heat. Note that, here, although an explanation is made using the electric heating type hot water heating apparatus 104 according to the fifth embodiment as an example, the above configuration can be applied also to the electric heating type hot water heating apparatus 103 according to the fourth embodiment likewise.

A switch mechanism 120 is, for example, a control mechanism using a relay. Switching can be easily performed by a simple mechanism by using a relay. The switch mechanism 120 has, for example, a first relay 121 and a second relay 122, and a control unit 123 for controlling the relays.

The first relay 121 and the second relay 122 have excitation coils 121a, 122a and contact points 121b, 122b which are closed by energizing the excitation coils 121a, 122a, respectively. An end of each of the excitation coils 121a, 122a is connected to a power supply 124 and the other end thereof is connected to the control unit 123. The control unit 123 controls energization or de-energization to the respective excitation coils 121a, 122a.

The first relay 121 and the second relay 122 are disposed in parallel with the power supply 124, and the contact point 121b of the first relay 121 is connected in series to the first ceramic heater 300. When the contact point 121b is closed by energizing the excitation coil 121a, the first ceramic heater 300 starts to be energized. Further, the contact point 122b of the second relay 122 is connected in series to the second ceramic heater 300a. When the contact point 122b is closed by energizing the excitation coil 122a, the second ceramic heater 300a starts to be energized.

The control unit 123 is an ECU (Electronic Control Unit) including a CPU as a central processing unit. The control unit 123 is input with sensor signals from various sensors such as a signal of a set temperature from an operation panel (not illustrated) set by an occupant, a water temperature sensor 125, an outdoor temperature sensor, an inside vehicle compartment temperature sensor, a solar radiation quantity sensor, and the like; subjects the signals to an arithmetic processing according to a predetermined program that is previously given; and controls the energization of the excitation coils 121a, 122a. The water temperature sensor 125 detects a temperature of the heat transfer medium which flows into or/and flows out from the electric heating type hot water heating apparatus 104.

When the required heating amount is smaller than the predetermined amount, only the first ceramic heater 300 is caused to generate heat. When the required heating amount is smaller than the predetermined amount, this is a time at which, for example, the occupant does not request prompt heating, and an inside vehicle compartment temperature is near to a target blowing-out temperature of air conditioning or a temperature of the heat transfer medium is equal to or higher than a predetermined temperature and a temperature difference of the heat transfer medium is small between an inlet port 31 and an outlet port 62. At the time, the control unit 123 energizes the excitation coil 121a of the first relay 121 and deenergizes the excitation coil 122a of the second relay 122, and causes only the first ceramic heater 300 to generate heat.

When the required heating amount is larger than the predetermined amount, the first ceramic heater 300 and the second ceramic heater 300a are caused to generate heat. When the required heating amount is larger than the predetermined amount, this is a time at which, for example, the inside vehicle compartment temperature is low and the occupant requests the prompt heating, and the temperature of the heat transfer medium is low. At the time, the control unit 123 energizes the excitation coil 121a of the first relay 121 and the excitation coil 122a of the second relay 122 together, and causes the first ceramic heater 300 and the second ceramic heater 300a to generate heat.

Further, in an HV vehicle, when the heat transfer medium is heated by exhaust heat of an engine 6, the temperature of the heat transfer medium is equal to or more higher than the predetermined temperature, and heating by the electric heating type hot water heating apparatus 104 is not necessary, the control unit 123 preferably deenergizes the excitation coil 121a of the first relay 121 and the excitation coil 122a of the second relay 122 together and uses only the exhaust heat of the engine.

Next, a vehicle provided with an electric heating type hot water heating apparatus 1 according to the embodiment will be explained.

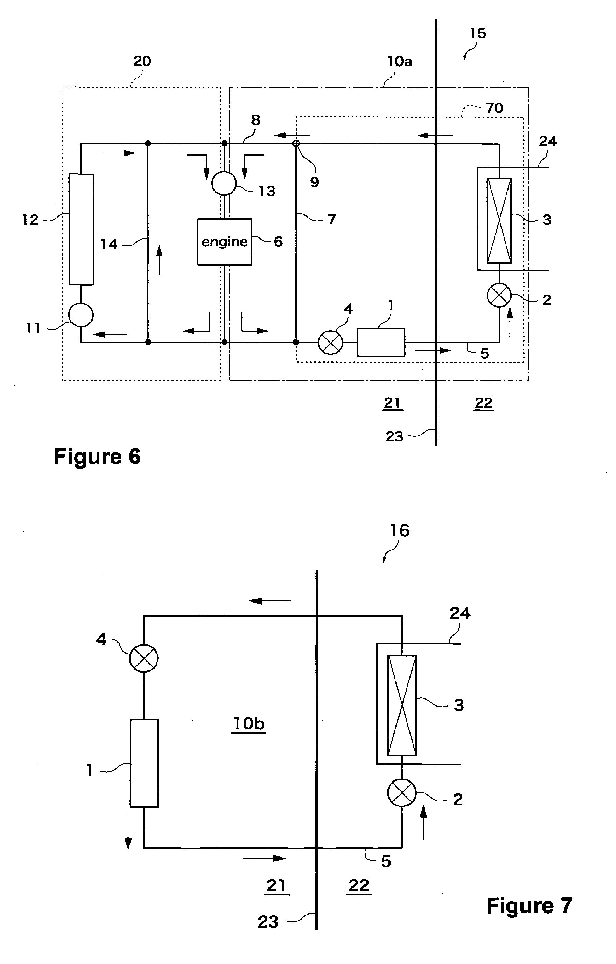

FIG. 6 is a schematic view showing a first example of a heating circuit of a vehicle air-conditioning apparatus and shows a mode that a vehicle is the HV vehicle. FIG. 7 is a schematic view showing a second example of the heating circuit of the vehicle air-conditioning apparatus and shows a mode that the vehicle is an EV vehicle. The electric heating type hot water heating apparatus 1 according to the embodiment supplies hot water as a heat transfer medium to a heating heat exchanger (hereinafter, called a heater core) 3 disposed in each of vehicle air-conditioning apparatuses 15 and 16 via a piping 5.

Each of the vehicle air-conditioning apparatus 15 and 16 has an HVAC (Heating, Ventilation, and Air Conditioning) unit 24, a refrigeration cycle (not illustrated), and heating circuits 10a, 10b.

The HVAC unit 24 ordinarily has a blower (not illustrated), an evaporator (not illustrated) and the heater core 3, and supplies air-conditioned air into a vehicle compartment 22. The heater core 3 exchanges heat of hot water circulating inside thereof with heat of cool air passing outside thereof, and makes hot air. The HVAC unit 24 is ordinarily disposed in the vehicle compartment 22. The vehicle compartment 22 is partitioned from an engine room 21 by a wall (for example, a fire wall or a toe board) 23.

The refrigeration cycle (not illustrated) supplies a low temperature refrigerant to the evaporator (not illustrated) in the HVAC unit 24. The refrigeration cycle (not illustrated) is ordinarily disposed in the engine room 21.

The heating circuit 10a and 10b supply the hot water as the heat transfer medium to the heater core 3 in the HVAC unit 24. When the vehicle is the HV vehicle as illustrated in FIG. 6 and has the engine 6, the heating circuit 10a has a water pump 13, the engine 6, the electric heating type hot water heating apparatus 1, a water valve 2, and the heater core 3. The water pump 13 circulates engine cooling water as the heat transfer medium to the heating circuit 10a and an engine cooling circuit 20. The engine 6 is an engine for combusting a fuel therein and generates a power. The electric heating type hot water heating apparatus 1 is, for example, the electric heating type hot water heating apparatuses 100, 101, 102, 103, and 104. The water valve 2 controls a flow rate of the heat transfer medium that flows into the heater core 3.

In the heating circuit 10a illustrated in FIG. 6, the heat transfer medium is the engine cooling water. The engine cooling water is fed from the engine 6 to the electric heating type hot water heating apparatus 1 by driving the water pump 13. The engine cooling water is heated by the exhaust heat of the engine 6 or/and by the electric heating type hot water heating apparatus 1. The heated engine cooling water flows into the heater core 3 after its flow rate is adjusted by the water valve 2, and returns to the engine 6 after its heat is exchanged with heat of cool air passing through the heater core 3.

Incidentally, the engine cooling water circulates also in the engine cooling circuit 20. FIG. 6 shows an example of the engine cooling circuit 20. The engine cooling circuit 20 has the water pump 13, the engine 6, a thermostat 11, and a radiator 12. In the engine cooling circuit 20, when a temperature of the engine cooling water is equal to or higher than a predetermined temperature (for example, equal to or higher than 80°C), the thermostat 11 opens, and the engine cooling water flows into the radiator 12 and returns to the engine 6 after its heat is exchanged with heat of air passing through the radiator 12. Further, when the temperature of the engine cooling water is lower than the predetermined temperature, the thermostat 11 closes, and the engine cooling water returns to the engine 6 passing through a path 14 that bypasses the radiator 12.

When the vehicle is the EV vehicle as illustrated in FIG. 7 and has no engine, the heating circuit 10b has the electric heating type hot water heating apparatus 1, the water valve 2, and the heater core 3. In the heating circuit 10b, the heat transfer medium is, for example, water and an antifreezing solution. As illustrated in FIG. 7, the heat transfer medium is heated by the electric heating type hot water heating apparatus 1 and flows out, then flows into the heater core 3 after its flow rate is adjusted by the water valve 2, and returns to the electric heating type hot water heating apparatus 1 after its heat is exchanged with the cool air passing through the heater core 3.

The electric heating type hot water heating apparatus 1 is preferably disposed in the engine room 21 from a viewpoint of safety. The piping 5 directly or indirectly connects the electric heating type hot water heating apparatus 1 disposed in the engine room 21 to the heater core 3 disposed in the vehicle compartment 22. Since the electric heating type hot water heating apparatus 1 is a unit independent of the HVAC unit 24 and can be disposed separately, a conventional HVAC unit can be employed as the HVAC unit 24.

The electric heating type hot water heating apparatus 1 according to the embodiment, it is preferable to further comprising a flow rate control means 4 for performing control for increasing the flow rate of the heat transfer medium when the required heating amount is large. When the required heating amount is large, this is a time at which, for example, the occupant requests the prompt heating because an inside vehicle compartment temperature is low, and the temperature of the heat transfer medium is low. The flow rate control means 4 is, for example, a water valve. In mode having the two ceramic heaters as in the electric heating type hot water heating apparatus 103 according to the fourth embodiment or the electric heating type hot water heating apparatus 104 according to the fifth embodiment, the flow rate control means 4 preferably performs a control for increasing a flow velocity in synchronization with a time at which a switch mechanism 120 causes first ceramic heaters 200, 300 and second ceramic heaters 200a, 300a to generate heat.

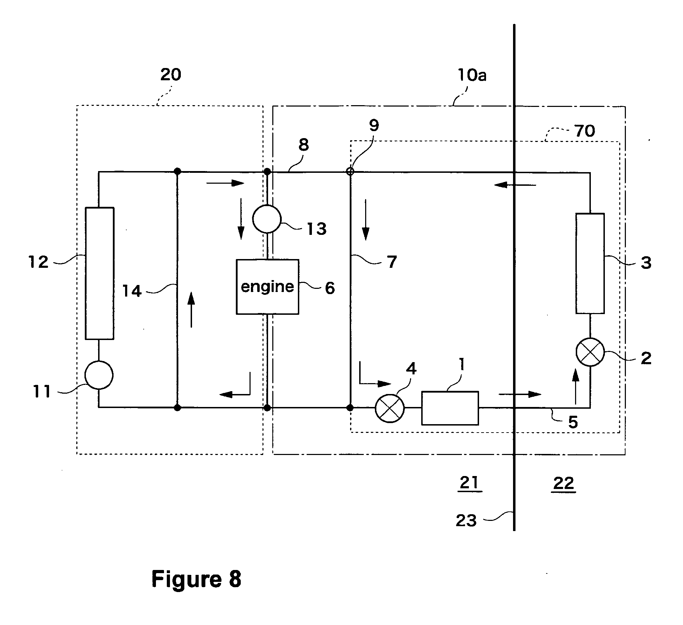

FIG. 8 is a schematic view showing a heating circuit of an HV vehicle air-conditioning apparatus and is a view explaining a case that the temperature of the engine cooling water is lower than the predetermined temperature. In the vehicle air-conditioning apparatus according to the embodiment, the vehicle is the hybrid vehicle including the heating circuit 10a for circulating the engine cooling water as the heat transfer medium between the engine 6 and the heater core 3, and it is preferable that the electric heating type hot water heating apparatus 1 according to the embodiment and a bypass circuit 70 which bypasses the engine 6 as well as circulates the hot water between the electric heating type hot water heating apparatus 1 and the heater core 3 are disposed on the heating circuit 10a, and the vehicle air-conditioning apparatus comprises a bypass control means 9 for opening the bypass circuit 70 when the temperature of the engine cooling water is lower than the predetermined temperature.

The bypass circuit 70 is provided with an engine bypass circuit 7 that bypasses the engine 6 and circulates the hot water between the electric heating type hot water heating apparatus 1 and the heater core 3. The bypass control means 9 is, for example, a 3-way valve. The bypass control means 9 switches a path of the heat transfer medium to any of the engine bypass circuit 7 or a path 8 communicating with the engine 6 according to the temperature of the engine cooling water. When the temperature of the engine cooling water is lower than the predetermined temperature, the bypass control means 9 opens the engine bypass circuit 7, closes the path 8 communicating with the engine 6, and opens the bypass circuit 70. At the time, the heat transfer medium is heated only by heat generated by the electric heating type hot water heating apparatus 1 as a heat source. Since an amount of the heat transfer medium circulating the bypass circuit 70 is smaller than an amount of the heat transfer medium circulating the heating circuit 10a passing through the engine 6, the heat transfer medium can be efficiently heated, which permits the prompt heating.

When the temperature of the engine cooling water is equal to or higher than the predetermined temperature, the engine bypass circuit 7 is closed, the path 8 communicating with the engine 6 is opened, and the heating circuit 10a is opened as illustrated in FIG. 6. At the time, the heat transfer medium is heated by the engine exhaust heat as a main heat source, and the heat generated by the electric heating type hot water heating apparatus 1 is used as an auxiliary heat source.

### EXPLANATION OF REFERENCE SIGNS

1 electric heating type hot water heating apparatus
2 water valve
3 heating heat exchanger (heater core)
4 flow rate control means
5 piping
6 engine
7 engine bypass circuit
8 path communicating with engine
9 bypass control means
10a, 10b heating circuit 11 thermostat
12 radiator
13 water pump
14 path
15, 16 vehicle air-conditioning apparatus
20 engine cooling circuit
21 engine room
22 vehicle compartment
23 wall
24 HVAC unit
30, 50 case
31 inlet port
32 outlet port
33 inserting port
34 taper section
40 flow path
41 upward flow path
42 lateral flow path
43 downward flow path
54 spiral guide
70 bypass circuit
100, 101, 102, 103, 104 electric heating type hot water heating apparatus
100a, 102a additional unit
120 switching control unit
121 first relay
122 second relay
121a, 122a excitation coil
121b, 122b contact point
123 control unit
124 power supply
125 water temperature sensor
200 ceramic heater (first ceramic heater)
200a second ceramic heater
210, 210a shaft section
211, 211a support member
212, 212a heater section
213, 213a terminal section
214, 214a lead wire
215, 215a flange
216, 216a drain wire
300 ceramic heater (first ceramic heater)
300a second ceramic heater
310, 310a shaft section
311, 311a support member
312, 312a heater section
313, 313a terminal section
314, 314a lead wire
315, 315a flange
316, 316a drain wire
317, 317a hollow section
318, 318a extreme end hole
319, 319a side surface hole
320, 320a bottom section
901 vibration-proof member
L1 water flow direction of upward flow path
L2 water flow direction of lateral flow path
L3 water flow direction of downward flow path
O1, O2 shaft section axial direction

## Claims

1. An electric heating type hot water heating apparatus (100) for supplying hot water as a heat transfer medium to a heating heat exchanger disposed in a vehicle air-conditioning apparatus via a piping, comprising:
a case having an inlet port (31), a flow path (40), and an outlet port (32) of the heat transfer medium; and
a ceramic heater (200) disposed in the flow path, :
**characterized in that**
the flow path includes an upward flow path (41) which extends in an up/down direction of a vehicle when the electric heating type hot water heating apparatus 100 is mounted on the vehicle, as well as in which a water flow direction of the heat transfer medium is directed upward;
the outlet port (32) is disposed on an upper end side of the upward flow path (41) when the electric heating type hot water heating apparatus 100 is mounted on the vehicle;
the ceramic heater (200) includes a rod-shaped shaft section (210) as well as is disposed in a state that an axis direction of the shaft section is caused to agree with the water flow direction of the heat transfer medium; and
a part or all of the shaft section (210) is a heat generating section.

2. The electric heating type hot water heating apparatus according to claim 1, wherein:
the flow path (40) further includes a lateral flow path (42) joined to the upward flow path (41) on a lower end side thereof; and the ceramic heater (200) is disposed in the upward flow path (41) .

3. The electric heating type hot water heating apparatus according to claim 2, wherein:
the ceramic heater (200) is a first ceramic heater;
the flow path further comprises a downward flow path (43) which extends in an up/down direction of a vehicle as well as in which a water flow direction of the heat transfer medium is directed downward;
the downward flow (43) path is joined to the lateral flow path (42) on a lower end side thereof;
a second ceramic heater (200a) is disposed in the downward flow path (43);
the second ceramic heater (200a) includes a rod-shaped shaft section (210a) as well as is disposed in a state that an axis direction of the shaft section is caused to agree with the water flow direction of the heat transfer medium; and
a part or all of the shaft section (210a) of the second ceramic heater (200a) is a heat generating section.

4. The electric heating type hot water heating apparatus according to claim 2, wherein:
the ceramic heater (200) includes a hollow section (317) extending in the axis direction of the shaft section, an extreme end hole (318) disposed on an upper end of the shaft section, and a side surface hole (319) disposed on a side surface of the shaft section; and
the side surface hole (319) is disposed toward the lateral flow path (42) side.

5. The electric heating type hot water heating apparatus according to claim 3, wherein:
each of the first ceramic heater (200) and the second ceramic heater (200a) includes a hollow section (317,317a) extending in the axis direction of the shaft section, an extreme end hole (318,318a) disposed on the upper end of the shaft section, and a side surface hole (319,319a) disposed on the side surface of the shaft section; and
any of the side surface holes (319,319a) is disposed toward the lateral flow path (42) side.

6. The electric heating type hot water heating apparatus according to claim 3 or 5, wherein:
when a required heating amount is smaller than a predetermined amount, only the first ceramic heater (200) is caused to generate heat; and
when the required heating amount is larger than the predetermined amount, the first ceramic heater (200) and the second ceramic heater (200a) are caused to generate heat.

7. The electric heating type hot water heating apparatus according to any one of claims 1 to 6, further comprising a flow rate control means (4) for performing control for increasing a flow rate of the heat transfer medium when the required heating amount is large.

8. The electric heating type hot water heating apparatus according to any one of claims 1 to 7, wherein:
the flow path (40) includes an upward flow path (41) which extends in an up/down direction of a vehicle as well as in which a water flow direction of the heat transfer medium is directed upward; and
an inner wall of the case (30) includes a taper section (34) whose inner diameter is gradually reduced toward an upper side on an upper end side of the upward flow path (41).

9. The electric heating type hot water heating apparatus according to any one of claims 1 to 8, wherein the ceramic heater (200) or/and the second ceramic heater (200a)include a vibration-proof member (901) disposed on a side surface.

10. The electric heating type hot water heating apparatus according to any one of claims 1 to 9, wherein the inner wall of the case (50) includes a spiral guide (54).

11. A vehicle air-conditioning apparatus comprises the electric heating type hot water heating apparatus (100) according to any one of claims 1 to 10.

12. The vehicle air-conditioning apparatus according to claim 11, wherein:
the vehicle is a hybrid vehicle including a heating circuit (10a, 10b) for circulating engine cooling water as a heat transfer medium between an engine (6) and a heating heat exchanger (3);
the electric heating type hot water heating apparatus and a bypass circuit (70) which bypasses the engine as well as circulates hot water between the electric heating type hot water heating apparatus and the heating heat exchanger are disposed on the heating circuit; and
the vehicle air-conditioning apparatus comprises a bypass control means (9) for opening the bypass circuit (70) when a temperature of the engine cooling water is lower than a predetermined temperature.

13. A vehicle comprising an electric heating type hot water heating apparatus (100) according to any one of claims 1 to 10.

## Patentansprüche

1. Elektrisch heizende Heißwassererwärmungsvorrichtung (100), um über eine Leitung Heißwasser als Wärmeübertragungsmedium an einen Heizwärmetauscher zu führen, der in einer Fahrzeugklimaanlagenvorrichtung angeordnet ist, Folgendes umfassend:
ein Gehäuse mit einem Einlassanschluss (31), einem Strömungsweg (40) und einem Auslassanschluss (32) für das Wärmeübertragungsmedium, und
ein Keramikheizgerät (200), das im Strömungsweg angeordnet ist,
**dadurch gekennzeichnet, dass**
der Strömungsweg einen aufwärtigen Strömungsweg (41) beinhaltet, der sich in eine Oben/Unten-Richtung eines Fahrzeugs erstreckt, wenn die elektrisch heizende Heißwassererwärmungsvorrichtung (100) an das Fahrzeug montiert ist, und in dem eine Wasserströmungsrichtung des Wärmeübertragungsmediums aufwärts gerichtet ist,
wobei der Auslassanschluss (32) an einer oberen Endseite des aufwärtigen Strömungsweges (41) angeordnet ist, wenn die elektrisch heizende Heißwassererwärmungsvorrichtung (100) an das Fahrzeug montiert ist,
wobei das Keramikheizgerät (200) einen stabförmigen Schaftabschnitt (210) beinhaltet und in einem Zustand angeordnet ist, in dem bewirkt wird, dass eine Achsrichtung des Schaftabschnitts mit der Wasserströmungsrichtung des Wärmeübertragungsmediums übereinstimmt, und
der Schaftabschnitt (210) ganz oder teilweise ein Wärmeerzeugungsabschnitt ist.

2. Elektrische heizungsartige Heißwassererwärmungsvorrichtung nach Anspruch 1, wobei:
der Strömungsweg (40) ferner einen seitlichen Strömungsweg (42) beinhaltet, der an einer unteren Endseite des aufwärtigen Strömungsweges (41) mit diesem verbunden ist, und
das Keramikheizgerät (200) im aufwärtigen Strömungsweg (41) angeordnet ist.

3. Elektrisch heizende Heißwassererwärmungsvorrichtung nach Anspruch 2, wobei:
das Keramikheizgerät (200) ein erstes Keramikheizgerät ist,
der Strömungsweg ferner einen abwärtigen Strömungsweg (43) umfasst, der sich in einer Oben/Unten-Richtung eines Fahrzeugs erstreckt und in dem eine Wasserströmungsrichtung des Wärmeübertragungsmediums abwärts gerichtet ist,
wobei der abwärtige Strömungsweg (43) an einer unteren Endseite des seitlichen Strömungsweges (42) mit diesem verbunden ist,
im abwärtigen Strömungsweg (43) ein zweites Keramikheizgerät (200a) angeordnet ist,
das zweite Keramikheizgerät (200a) einen stabförmigen Schaftabschnitt (210a) beinhaltet und in einem Zustand angeordnet ist, in dem bewirkt wird, dass eine Achsrichtung des Schaftabschnitts mit der Wasserströmungsrichtung des Wärmeübertragungsmediums übereinstimmt, und
der Schaftabschnitt (210a) des zweiten Keramikheizgerätes (200a) ganz oder teilweise ein Wärmeerzeugungsabschnitt ist.

4. Elektrisch heizende Heißwassererwärmungsvorrichtung nach Anspruch 2, wobei:
das Keramikheizgerät (200) einen hohlen Abschnitt (317) beinhaltet, der sich in der Achsrichtung des Schaftabschnitts erstreckt, eine äußerste Endöffnung (318), die an einem oberen Ende des Schaftabschnitts angeordnet ist, sowie eine Seitenflächenöffnung (319), die an einer Seitenfläche des Schaftabschnitts angeordnet ist, und
die Seitenflächenöffnung (319) hin zur Seite des seitlichen Strömungsweges (42) angeordnet ist.

5. Elektrisch heizende Heißwassererwärmungsvorrichtung nach Anspruch 3, wobei:
das erste Keramikheizgerät (200) und das zweite Keramikheizgerät (200a) jeweils einen hohlen Abschnitt (317, 317a) beinhalten, der sich in der Achsrichtung des Schaftabschnitts erstreckt, eine äußerste Endöffnung (318, 318a), die am oberen Ende des Schaftabschnitts angeordnet ist, und eine Seitenflächenöffnung (319, 319a), die an der Seitenfläche des Schaftabschnitts angeordnet ist, und
jede der Seitenflächenöffnungen (319, 319a) hin zur Seite des seitlichen Strömungsweges (42) angeordnet ist.

6. Elektrisch heizende Heißwassererwärmungsvorrichtung nach Anspruch 3 oder 5, wobei:
das Heizen nur des ersten Keramikheizgerätes (200) bewirkt wird, wenn eine erforderliche Heizmenge kleiner als eine festgelegte Heizmenge ist, und
das Heizen des ersten Keramikheizgerätes (200) und des zweiten Keramikheizgerätes (200a) bewirkt wird, wenn die erforderliche Heizmenge größer als die festgelegte Heizmenge ist.

7. Elektrisch heizende Heißwassererwärmungsvorrichtung nach einem der Ansprüche 1 bis 6, ferner ein Strömungsratensteuermittel (4) zum Ausführen einer Steuerung umfassend, um eine Strömungsrate des Wärmeübertragungsmediums zu erhöhen, wenn die erforderliche Heizmenge groß ist.

8. Elektrisch heizende Heißwassererwärmungsvorrichtung nach einem der Ansprüche 1 bis 7, wobei:
der Strömungsweg (40) einen aufwärtigen Strömungsweg (41) beinhaltet, der sich in eine Oben/Unten-Richtung eines Fahrzeugs erstreckt, und in dem eine Wasserströmungsrichtung des Wärmeübertragungsmediums aufwärts gerichtet ist, und
eine Innenwand des Gehäuses (30) einen sich verjüngenden Abschnitt (34) beinhaltet, dessen Innendurchmesser sich zu einer oberen Seite an einer oberen Endseite des aufwärtigen Strömungsweges (41) hin allmählich verringert.

9. Elektrisch heizende Heißwassererwärmungsvorrichtung nach einem der Ansprüche 1 bis 8, wobei das Keramikheizgerät (200) und/oder das zweite Keramikheizgerät (200a) ein schwingungssicheres Element (901) beinhalten/beinhaltet, das an einer Seitenfläche angeordnet ist.

10. Elektrisch heizende Heißwassererwärmungsvorrichtung nach einem der Ansprüche 1 bis 9, wobei die Innenwand des Gehäuses (50) eine Spiralführung (54) beinhaltet.

11. Fahrzeugklimaanlagenvorrichtung, welche die elektrisch heizende Heißwassererwärmungsvorrichtung (100) nach einem der Ansprüche 1 bis 10 beinhaltet.

12. Fahrzeugklimaanlagenvorrichtung nach Anspruch 11, wobei:
das Fahrzeug ein Hybridfahrzeug ist, das einen Heizkreis (10a, 10b) für die Zirkulation von Motorkühlwasser als Wärmeübertragungsmedium zwischen einem Motor (6) und einem Heizwärmetauscher (3) beinhaltet,
wobei die elektrisch heizende Heißwassererwärmungsvorrichtung und eine Umgehungsleitung (70), die den Motor umgeht und Heißwasser zwischen der elektrisch heizenden Heißwassererwärmungsvorrichtung und dem Heizwärmetauscher zirkulieren lässt, am Heizkreis angeordnet sind, und
die Fahrzeugklimaanlagenvorrichtung ein Umgehungssteuermittel (9) zum Öffnen der Umgehungsleitung (70) umfasst, wenn eine Temperatur des Motorkühlwassers geringer als eine festgelegte Temperatur ist.

13. Fahrzeug, eine elektrisch heizende Heißwassererwärmungsvorrichtung (100) nach einem der Ansprüche 1 bis 10 umfassend.

## Revendications

1. Appareil de chauffage d'eau chaude (100) de type chauffage électrique pour fournir de l'eau chaude sous forme de milieu de transfert thermique à un échangeur de chaleur de chauffage disposé dans un appareil de climatisation d'un véhicule par le biais d'une canalisation, comprenant :
un carter ayant un orifice d'entrée (31), un chemin d'écoulement (40) et un orifice de sortie (32) du milieu de transfert thermique ; et
un dispositif de chauffage céramique (200) disposé dans le chemin d'écoulement,
**caractérisé en ce que**
le chemin d'écoulement comporte un chemin d'écoulement vers le haut (41) qui s'étend dans une direction haut/bas d'un véhicule lorsque l'appareil de chauffage d'eau chaude (100) de type chauffage électrique est monté sur le véhicule, et dans lequel une direction d'écoulement d'eau du milieu de transfert thermique est orientée vers le haut ;
l'orifice de sortie (32) est disposé sur un côté d'extrémité supérieure du chemin d'écoulement vers le haut (41) lorsque l'appareil de chauffage d'eau chaude (100) de type chauffage électrique est monté sur le véhicule ;
le dispositif de chauffage céramique (200) comporte une section d'arbre en forme de tige (210) et est disposé dans un état dans lequel une direction de l'axe de la section d'arbre est amenée à coïncider avec la direction d'écoulement d'eau du milieu de transfert thermique ; et
une partie ou la totalité de la section d'arbre (210) est une section de génération de chaleur.

2. Appareil de chauffage d'eau chaude de type chauffage électrique selon la revendication 1, dans lequel :
le chemin d'écoulement (40) comporte en outre un chemin d'écoulement latéral (42) réuni au chemin d'écoulement vers le haut (41) sur un côté d'extrémité inférieure de celui-ci ;
et le dispositif de chauffage céramique (200) est disposé dans le chemin d'écoulement vers le haut (41).

3. Appareil de chauffage d'eau chaude de type chauffage électrique selon la revendication 2, dans lequel :
le dispositif de chauffage céramique (200) est un premier dispositif de chauffage céramique ;
le chemin d'écoulement comprend en outre un chemin d'écoulement vers le bas (43) qui s'étend dans une direction haut/bas d'un véhicule et dans lequel une direction d'écoulement d'eau du milieu de transfert thermique est dirigée vers le bas ;
le chemin d'écoulement vers le bas (43) est réuni au chemin d'écoulement latéral (42) sur un côté d'extrémité inférieure de celui-ci ;
un deuxième dispositif de chauffage céramique (200a) est disposé dans le chemin d'écoulement vers le bas (43) ;
le deuxième dispositif de chauffage céramique (200a) comporte une section d'arbre en forme de tige (210a) qui est disposée dans un état dans lequel une direction de l'axe de la section d'arbre est amenée à coïncider avec la direction d'écoulement d'eau du milieu de transfert thermique ; et
une partie ou la totalité de la section d'arbre (210a) du deuxième dispositif de chauffage céramique (200a) est une section de génération de chaleur.

4. Appareil de chauffage d'eau chaude de type chauffage électrique selon la revendication 2, dans lequel :
le dispositif de chauffage céramique (200) comporte une section creuse (317) s'étendant dans la direction de l'axe de la section d'arbre, un orifice d'extrémité extrême (318) disposé sur une extrémité supérieure de la section d'arbre, et un orifice de surface latérale (319) disposé sur une surface latérale de la section d'arbre ; et
l'orifice de surface latérale (319) est disposé vers le côté du chemin d'écoulement latéral (42).

5. Appareil de chauffage d'eau chaude de type chauffage électrique selon la revendication 3, dans lequel :
chacun du premier dispositif de chauffage céramique (200) et du deuxième dispositif de chauffage céramique (200a) comporte une section creuse (317, 317a) s'étendant dans la direction de l'axe de la section d'arbre, un orifice d'extrémité extrême (318, 318a) disposé sur l'extrémité supérieure de la section d'arbre, et un orifice de surface latérale (319, 319a) disposé sur la surface latérale de la section d'arbre ; et
l'un quelconque des orifices de surface latérale (319, 319a) est disposé vers le côté du chemin d'écoulement latéral (42).

6. Appareil de chauffage d'eau chaude de type chauffage électrique selon la revendication 3 ou 5, dans lequel :
lorsqu'une quantité de chauffage requise est inférieure à une quantité prédéterminée, seul le premier dispositif de chauffage céramique (200) est commandé de manière à générer de la chaleur ; et
lorsque la quantité de chauffage requise est plus grande que la quantité prédéterminée, le premier dispositif de chauffage céramique (200) et le deuxième dispositif de chauffage céramique (200a) sont commandés de manière à générer de la chaleur.

7. Appareil de chauffage d'eau chaude de type chauffage électrique selon l'une quelconque des revendications 1 à 6, comprenant en outre un moyen de commande du débit (4) pour effectuer une commande de manière à augmenter un débit du milieu de transfert thermique lorsque la quantité de chauffage requise est grande.

8. Appareil de chauffage d'eau chaude de type chauffage électrique selon l'une quelconque des revendications 1 à 7, dans lequel :
le chemin d'écoulement (40) comporte un chemin d'écoulement vers le haut (41) qui s'étend dans une direction haut/bas d'un véhicule et dans lequel une direction d'écoulement d'eau du milieu de transfert thermique est dirigée vers le haut ; et
une paroi intérieure du carter (30) comporte une section conique (34) dont le diamètre intérieur est progressivement réduit vers un côté supérieur sur un côté d'extrémité supérieure du chemin d'écoulement vers le haut (41).

9. Appareil de chauffage d'eau chaude de type chauffage électrique selon l'une quelconque des revendications 1 à 8, dans lequel le dispositif de chauffage céramique (200) et/ou le deuxième dispositif de chauffage céramique (200a) comportent un organe résistant aux vibrations (901) disposé sur une surface latérale.

10. Appareil de chauffage d'eau chaude de type chauffage électrique selon l'une quelconque des revendications 1 à 9, dans lequel la paroi interne du carter (50) comporte un guide en spirale (54).

11. Appareil de climatisation d'un véhicule comprenant l'appareil de chauffage d'eau chaude de type chauffage électrique selon l'une quelconque des revendications 1 à 10.

12. Appareil de climatisation d'un véhicule selon la revendication 11, dans lequel :
le véhicule est un véhicule hybride comportant un circuit de chauffage (10a, 10b) pour faire circuler de l'eau de refroidissement du moteur en tant que milieu de transfert thermique entre un moteur (6) et un échangeur de chaleur de chauffage (3) ;
l'appareil de chauffage d'eau chaude de type chauffage électrique et un circuit de dérivation (70) qui contourne le moteur et fait circuler de l'eau chaude entre l'appareil de chauffage d'eau chaude de type chauffage électrique et l'échangeur de chaleur de chauffage sont disposés sur le circuit de chauffage ; et
l'appareil de climatisation du véhicule comprend un moyen de commande de dérivation (9) pour ouvrir le circuit de dérivation (70) lorsqu'une température de l'eau de refroidissement du moteur est inférieure à une température prédéterminée.

13. Véhicule comprenant un appareil de chauffage d'eau chaude de type chauffage électrique (100) selon l'une quelconque des revendications 1 à 10.
